# EUROPEAN PATENT APPLICATION

(11) **EP 4 209 906 A1**
(43) Date of publication of application: **12.07.2023**
(21) Application number: 21879151.5
(22) Date of filing: 03.09.2021
(51) Int. Cl.: G06F 9/50

(54) **MEMORY MANAGEMENT METHOD, ELECTRONIC DEVICE, AND COMPUTER-READABLE STORAGE MEDIUM**

(30) Priority: 12.10.2020 CN 202011086582
(71) Applicant: Huawei Technologies Co., Ltd., Shenzhen, Guangdong 518129 (CN)
(72) Inventor: GAO, Qiang, Shenzhen, Guangdong 518129 (CN); LIU, Song, Shenzhen, Guangdong 518129 (CN)
(74) Representative: Pfenning, Meinig & Partner mbB
(86) International application number: PCT/CN2021/116550
(87) International publication number: WO 2022/078105

(57) **Abstract**

Disclosed in embodiments of this application are a memory management method, an electronic device, and a computer-readable storage medium. The method in embodiments of this application may include: obtaining a resource requirement that a process in kernel space correspondingly waits for; if it is detected that a first process is in a first state and meets a preset condition, changing the first process in the first state to a second state, and swapping out a memory resource of the first process; and if it is detected that a released system resource meets a resource requirement of the first process in the second state, changing a status of the first process, and swapping in a memory resource. According to embodiments of this application, the first process in the first state may be changed to the second state, and the memory resource of the first process may be swapped out. Therefore, stability of an operating system can be improved, stalling of the electronic device can be avoided, and user experience can be improved.

## Description

### TECHNICAL FIELD

Embodiments of this application relate to the field of computer technologies, and in particular, to a memory management method, an electronic device, and a computer-readable storage medium.

### BACKGROUND

With development of terminal technologies, a terminal may run various processes, and the processes may include a system process of an operating system and an application process of an application. However, each process occupies a specific amount of memory in a running process, and data of the process is stored in the memory. With running of the terminal, a quantity of opened applications increases, more processes run in the terminal, more memory is occupied, and idle memory keeps decreasing. When the idle memory of the terminal does not meet a memory requirement, the memory occupied by the processes needs to be reclaimed, to ensure that the idle memory of the terminal meets the memory requirement. However, a low memory killer (Low Memory Killer, LMK) in a current Android (Android) system cannot release memory occupied by a process in an uninterruptible sleep state.

### SUMMARY

Embodiments of this application provide a memory management method, an electronic device, and a computer-readable storage medium, to improve stability of an operating system and improve user experience.

According to a first aspect, an embodiment of this application provides a memory management method, including: obtaining a resource requirement that a process in kernel space correspondingly waits for; if it is detected that a first process is in a first state and meets a preset condition, changing the first process in the first state to a second state, and swapping out a memory resource of the first process; and if it is detected that a released system resource meets a resource requirement of the first process in the second state, changing a status of the first process, and swapping in a memory resource.

According to the method provided in this embodiment of this application, after the first process enters the first state, for example, when a time of some processes in an uninterruptible sleep state exceeds preset duration, the electronic device may change the first process in the first state to the second state, and may swap out the memory resource of the first process. Therefore, a problem that an operating system is in an uninterruptible sleep state for a long time due to some processes can be avoided, stability of the operating system can be improved, stalling of the electronic device can be avoided, and user experience can be improved.

In a possible design, the method further includes: if it is detected that the released system resource meets the resource requirement of the first process in the second state, changing the status of the first process to a third state, and swapping in the memory resource. Based on this design, when the released system resource meets the resource requirement of the first process in the second state, the first process in the second state directly obtains a resource waited for after the memory resource is swapped in, and may switch to the third state. In this way, the process can be resumed, and user experience can be improved.

In a possible design, the method further includes: if it is detected that the released system resource meets the resource requirement of the first process in the second state, changing the status of the first process to the first state, and allocating, by a system, a resource to the first process. Based on this design, when the released system resource meets the resource requirement of the first process in the second state, the first process in the first state may be switched to the first state after swapping in. Therefore, the first process in the first state can be switched to the third state after the resource waited for is obtained, and the process can be resumed.

In a possible design, a resource of the resource requirement includes at least one of a memory resource, an IO resource, and a lock resource. In this design, a resource requirement that a process correspondingly waits for is obtained. When the released system resource can meet the resource requirement of the first process in the second state, a process can be correspondingly resumed based on a type of the released system resource, thereby improving stability of the operating system.

In a possible design, before the changing the first process in the first state to a second state, the method further includes: swapping out storage space for the first process; and storing process information of the first process in the storage space. In this design, when the memory resource of the first process needs to be swapped out, the process information of the first process may be stored in the storage space, to avoid a data loss and ensure data security.

In a possible design, after the changing the first process in the first state to a second state, the method further includes: if the resource requirement of the first process is a memory resource, if it is detected that the released system resource meet a memory resource that the first process waits for, changing the status of the first process, and swapping in the memory resource. In this design, when the resource requirement of the first process is a memory resource, the process can be resumed based on the released memory resource, thereby improving stability of the operating system.

In a possible design, after the changing the first process in the first state to a second state, the method further includes: if the resource requirement of the first process is an IO resource, if it is detected that the released system resource meets an IO resource that the first process waits for, changing the status of the first process, and swapping in the memory resource. Therefore, when the resource requirement of the first process is an IO resource, the process can be resumed based on the released IO resource, thereby improving stability of the operating system.

In a possible design, after the changing the first process in the first state to a second state, the method further includes: if the resource requirement of the first process is a lock resource, if it is detected that the released system resource meets a lock resource that the first process waits for, changing the status of the first process, and swapping in the memory resource. Therefore, when the resource requirement of the first process is a lock resource, the process can be resumed based on the released lock resource, thereby further improving stability of the operating system.

In a possible design, the process information includes at least one of a process identifier, a time for which a process is in the first state, and a data information status of the process. Therefore, when the memory resource of the first process needs to be swapped out, the process information of the first process may be stored in the storage space, to avoid a data loss and ensure data security.

In a possible design, the method further includes: obtaining a size of memory occupied by the first process and a time for which the first process has entered the first state; obtaining a swap-out priority of the first process based on the size of memory occupied by the first process and the time for which the first process has entered the first state; and determining, based on the swap-out priority of the first process, a to-be-swapped-out first process in the first process. Therefore, the first process that occupies large memory and that has entered the first state for a long time may be preferentially swapped out, so that a memory resource occupied by the first process can be swapped out in time, thereby improving running efficiency of the system.

According to a second aspect, an embodiment of this application further provides a memory management apparatus. The memory management apparatus includes:
a detection module, configured to obtain a resource requirement that a process in kernel space correspondingly waits for; and
a process management module, configured to: if it is detected that a first process is in a first state and meets a preset condition, change the first process in the first state to a second state, and swap out a memory resource of the first process.

The process management module is further configured to: if it is detected that a released system resource meets a resource requirement of the first process in the second state, change a status of the first process, and swap in a memory resource.

According to the memory management apparatus provided in this embodiment of this application, after the first process enters the first state, for example, when a time of some processes in an uninterruptible sleep state exceeds preset duration, the electronic device may change the first process in the first state to the second state, and may swap out the memory resource of the first process. Therefore, a problem that an operating system is in an uninterruptible sleep state for a long time due to some processes can be avoided, stability of the operating system can be improved, stalling of the electronic device can be avoided, and user experience can be improved.

In a possible design, the process management module is further configured to: if it is detected that the released system resource meets the resource requirement of the first process in the second state, change the status of the first process to a third state, and swap in the memory resource. Based on this design, when the released system resource meets the resource requirement of the first process in the second state, the first process in the second state directly obtains a resource waited for after the memory resource is swapped in, and may switch to the third state. In this way, the process can be resumed, and user experience can be improved.

In a possible design, the process management module is further configured to: if it is detected that the released system resource meets the resource requirement of the first process in the second state, change the status of the first process to the first state, and allocate, by a system, a resource to the first process. Based on this design, when the released system resource meets the resource requirement of the first process in the second state, the first process in the first state may be switched to the first state after swapping in. Therefore, the first process in the first state can be switched to the third state after the resource waited for is obtained, and the process can be resumed.

In a possible design, the memory management apparatus further includes:
an allocation module, where before the process management module changes the first process in the first state to the second state, the allocation module is further configured to swap out storage space for the first process; and
a storage module, configured to store process information of the first process in the storage space.

Based on this design, when the memory resource of the first process needs to be swapped out, the process information of the first process may be stored in the storage space, to avoid a data loss and ensure data security.

In a possible design, the detection module is further configured to: the memory management apparatus further includes a determining module, where
the detection module is configured to: obtain a size of memory occupied by the first process and a time for which the first process has entered the first state; and obtain a swap-out priority of the first process based on the size of memory occupied by the first process and the time for which the first process has entered the first state; and the determining module is configured to determine, based on the swap-out priority of the first process, a to-be-swapped-out first process in the first process, that is, configured to determine a priority order of swapping out memory resources of a plurality of first processes in the first state.

Based on this design, therefore, the first process that occupies large memory and that has entered the first state for a long time may be preferentially swapped out, so that a memory resource occupied by the first process can be swapped out in time, thereby improving running efficiency of the system.

According to a third aspect, an embodiment of this application further provides an electronic device, including:
a memory, configured to store a computer program; and
a processor, configured to execute the computer program stored in the memory, where when the computer program is executed, the processor is configured to perform the foregoing method. Therefore, the first process in the first state is changed to the second state, and the memory resource of the first process may be swapped out, so that stability of an operating system can be improved, stalling of the electronic device can be avoided, and user experience can be improved.

According to a technical solution in this embodiment of this application, after the first process enters the first state, for example, when a time of some processes in an uninterruptible sleep state exceeds preset duration, the electronic device may change the first process in the first state to the second state, and may swap out the memory resource of the first process. Therefore, a problem that an operating system is in an uninterruptible sleep state for a long time due to some processes can be avoided, stability of the operating system can be improved, stalling of the electronic device can be avoided, and user experience can be improved.

According to a fourth aspect, an embodiment of this application further provides a computer-readable storage medium, where the computer-readable storage medium includes computer instructions, and when the computer instructions run on an electronic device, the electronic device performs the foregoing method. Therefore, the first process in the first state is changed to the second state, and the memory resource of the first process may be swapped out, so that stability of an operating system can be improved, stalling of the electronic device can be avoided, and user experience can be improved.

In embodiments of this application, when the system is in a low memory state or some processes are in an uninterruptible sleep state for a time longer than a preset time, the electronic device may change the first process in the uninterruptible sleep state to the second state, and may swap out the memory resource of the first process, so that stability of the operating system can be improved, stalling of the electronic device can be avoided, and user experience can be improved.

### BRIEF DESCRIPTION OF DRAWINGS

FIG. 1 is a schematic diagram of an electronic device to which a memory management method is applicable according to an embodiment of this application;
FIG. 2 is a schematic diagram of a structure of an operating system according to an embodiment of this application;
FIG. 3 is a schematic flowchart of a memory management method according to an embodiment of this application;
FIG. 4 is a schematic flowchart of another memory management method according to an embodiment of this application;
FIG. 5 is a schematic flowchart of another memory management method according to an embodiment of this application;
FIG. 6 is a schematic flowchart of another memory management method according to an embodiment of this application;
FIG. 7 is a diagram of state switching of a process in kernel space according to an embodiment of this application;
FIG. 8 is a schematic diagram of a process operation according to an embodiment of this application;
FIG. 9 is a schematic flowchart of another memory management method according to an embodiment of this application;
FIG. 10 is a schematic flowchart of another memory management method according to an embodiment of this application;
FIG. 11 is a schematic flowchart of another memory management method according to an embodiment of this application; and
FIG. 12 is a schematic diagram of a structure of a memory management apparatus according to an embodiment of this application.

**Description of main component symbols**

| | |
|---|---|
| Electronic device | 100 |
| Processor | 110 |
| External memory interface | 120 |
| Internal memory | 121 |
| USB interface | 130 |
| Charging management module | 140 |
| Power management module | 141 |
| Battery | 142 |
| Antenna | 1, 2 |
| Mobile communication module | 150 |
| Wireless communication module | 160 |
| Audio module | 170 |
| Speaker | 170A |
| Receiver | 170B |
| Microphone | 170C |
| Headset jack | 170D |
| Sensor module | 180 |
| Pressure sensor | 180A |
| Gyro sensor | 180B |
| Barometric pressure sensor | 180C |
| Magnetic sensor | 180D |
| Acceleration sensor | 180E |
| Distance sensor | 180F |
| Optical proximity sensor | 180G |
| Fingerprint sensor | 180H |
| Temperature sensor | 180J |
| Touch sensor | 180K |
| Ambient light sensor | 180L |
| Bone conduction sensor | 180M |
| Button | 190 |
| Motor | 191 |
| Indicator | 192 |
| Camera | 193 |
| Display | 194 |
| SIM card interface | 195 |
| Memory management apparatus | 200 |
| Detection module | 201 |
| Process management module | 202 |
| Allocation module | 203 |
| Storage module | 204 |
| Determining module | 205 |

The following specific implementations further describe this application in detail with reference to the foregoing accompanying drawings.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

Disclosed in embodiments of this application are a memory management method, an electronic device, and a computer-readable storage medium, to improve stability of an operating system, avoid stalling of the electronic device, and improve user experience.

"A plurality of" in this application means two or more. In addition, it should be understood that in description of this application, terms such as "first" and "second" are merely used for distinguishing and description, but should not be understood as indicating or implying relative importance, or should not be understood as indicating or implying a sequence.

The memory management method provided in embodiments of this application may be applied to an electronic device. The electronic device may also be referred to as user equipment (User Equipment, UE), a mobile station (Mobile Station, MS), a mobile terminal (Mobile Terminal), or the like. Optionally, the electronic device may have a capability of communicating with one or more core networks through a radio access network (Radio Access Network, RAN). For example, the electronic device may be a mobile phone (or referred to as a "cellular" phone), a computer with a mobile property, or the like. An operating system of the electronic device may include but is not limited to a Linux system, an Android (Android) system, an IOS operating system, a Symbian (Symbian) operating system, a Black Berry (BlackBerry) operating system, a Windows Phone 8 operating system, and the like. It may be understood that the memory management method provided in embodiments of this application may be applied to an electronic device with a Linux operating system.

To better understand embodiments of this application, several terms in embodiments of this application are first explained.

Kernel space and user space: as the kernel of a computing device, an operating system is independent of common applications. The operating system can access protected memory space and has all permissions to access underlying hardware devices. To ensure that a user process does not directly operate a kernel and ensure kernel security, the operating system divides addressing space (the addressing space may be a part of space in memory of the computing device, or may be virtual storage space) into two parts. One part is kernel space, and the kernel space is protected memory space and is used to store kernel code and data; and the other part is user space and is used to store application code and data.

Kernel mode and user mode: when a process executes code of a user program, the process is in a user mode. Correspondingly, when a process executes a system call and is trapped in kernel code for execution, it is referred to that the process is in a kernel mode. User-mode processes run in user space, and kernel-mode processes run in kernel space.

A process that can be interrupted in a sleep state may also be referred to as a process that can be interrupted in a sleep (task_interruptable) state, and is also referred to as a process in an S state. When a process execution condition is met, the process that can be interrupted in the sleep state is woken up to start to execute the process.

A process that cannot be interrupted in a sleep state may also be referred to as a process that is in a task _uninterruptible (task_uninterruptable) state, and is also referred to as a process in a D state. Generally, the process is formed because I/O resources are not met. The process is in a sleep state, and at this time the process cannot be interrupted. Uninterruptible does not mean that a CPU does not respond to an interruption of external hardware, but means that a process does not respond to an asynchronous signal. It may be understood that the meaning of the uninterruptible sleep state is that some processing procedures of the kernel cannot be interrupted. If an asynchronous signal is responded to, a procedure of processing an asynchronous signal is inserted into an execution procedure of a program. The inserted procedure may exist only in a kernel mode, or may extend to a user mode. Therefore, an original procedure is interrupted. Therefore, when a process performs an operation on hardware, the process may need to be protected by using an uninterruptible sleep state, to keep a process of interaction between the process and a device from being interrupted, and consequently the device enters an uncontrollable state. However, when duration of the uninterruptible sleep state is long, a response delay is caused to an operating system, and stability of the operating system is affected.

A process in an executable (task _running) state is also referred to as a process in an R state. A process in this state may run on a CPU. The executable state indicates that a process can run but does not obtain a CPU resource. A process in a task stopped state is also called a process in a T state. The task stopped state indicates that the process is stopped and cannot run. A process in a task_dead state is also called a process in a Z state. The task_dead state indicates that the process has started to exit.

Specifically, a Linux system is used as an example. The foregoing uses a task_stuct structure for description. Each process corresponds to a task_stuct data structure. When a process is running, the task_stuct data structure is loaded into memory and includes information of the process, and each process places the information of the process in the data structure.

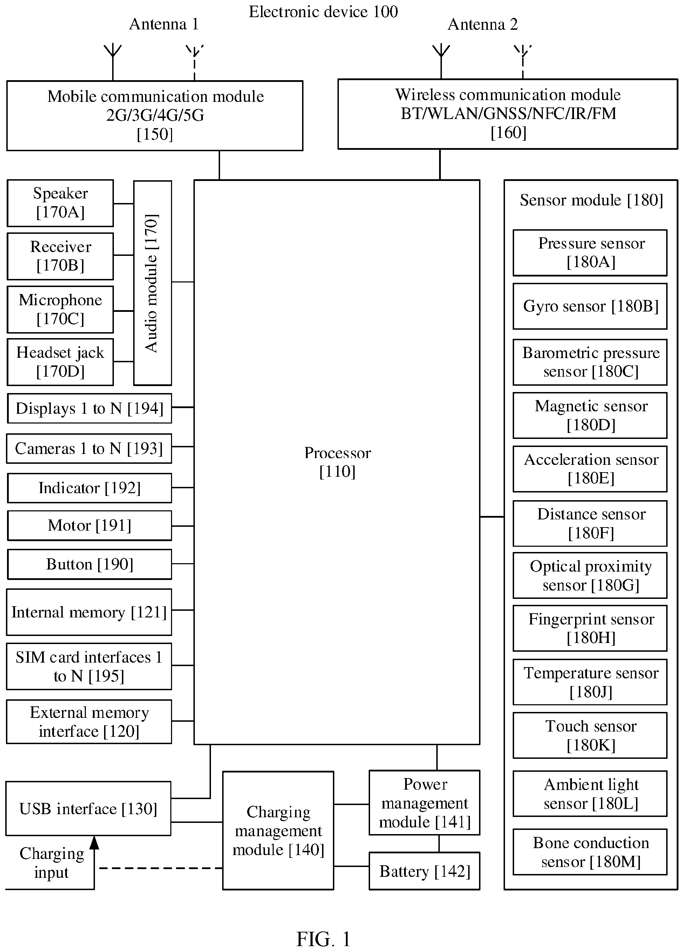

FIG. 1 is a schematic diagram of a structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device is not limited in this embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an 12S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memory, RAM) and one or more nonvolatile memories (non-volatile memory, NVM).

The random access memory may include a static random access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like.

The nonvolatile memory may include a magnetic disk storage device and a flash memory (flash memory).

The flash memory may include a NOR FLASH, a NAND FLASH, a 3D NAND FLASH, and the like according to an operation principle. The flash memory may include a single-level cell (single-level cell, SLC), a multi-level cell (multi-level cell, MLC), a triple-level cell (triple-level cell, TLC), a quad-level cell (quad-level cell, QLC), and the like based on a number of cell levels. The flash memory may include a universal flash storage (English: universal flash storage, UFS), an embedded multimedia card (embedded multi media card, eMMC), and the like according to a storage specification.

The random access memory may be directly read and written by the processor 110. The random access memory may be configured to store an operating system or an executable program (for example, machine instructions) of another running program, and may be further configured to store data of a user and an application, and the like.

The nonvolatile memory may also store an executable program, data of a user, data of an application, and the like, which may be loaded into the random access memory in advance for directly reading and writing by the processor 110.

The external memory interface 120 may be configured to connect to an external nonvolatile memory, to extend a storage capability of the electronic device 100. The external nonvolatile memory communicates with the processor 110 through the external memory interface 120, to implement a data storage function. For example, files such as music and videos are stored in the external nonvolatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to play music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to keep the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical key or a touch key. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100. A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

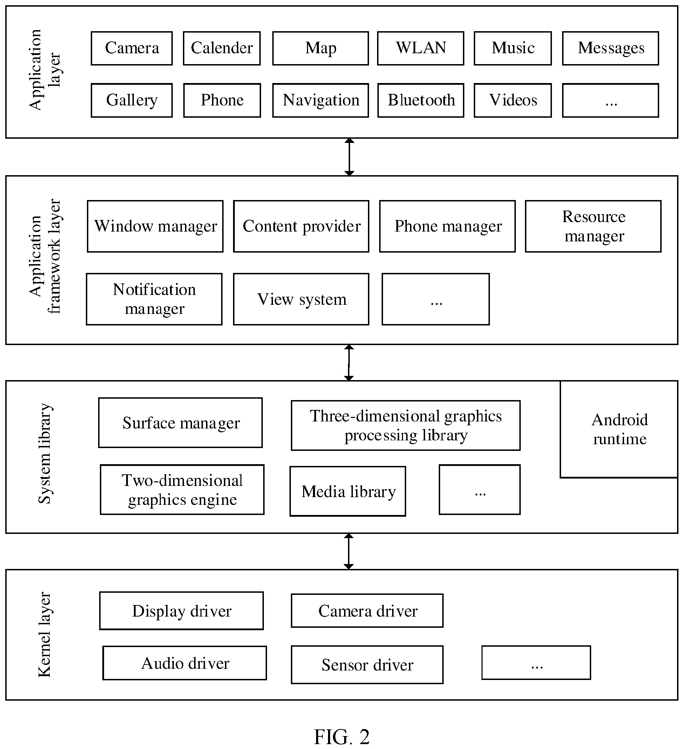

FIG. 2 is a block diagram of a software structure of the electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

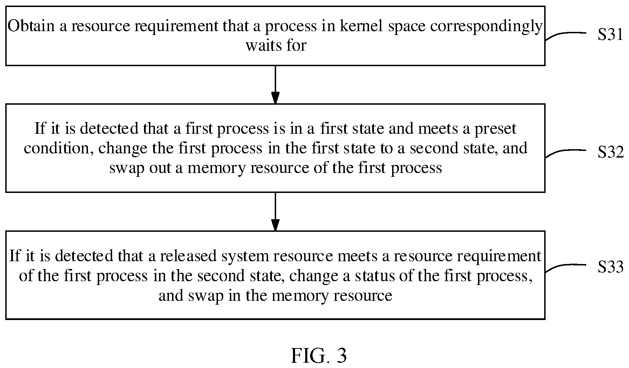

FIG. 3 is a flowchart of a memory management method according to an embodiment of this application. As shown in FIG. 3, the method may be performed by an electronic device 100. A Linux system is used as an example to describe a specific implementation process of this application. However, an application scenario of this application is not limited to the Linux system, but may be an Android system, an IOS system, Windows, or the like. The electronic device may be a mobile phone, a tablet computer, or the like. The method may include but is not limited to the following steps.

Step S31: Obtain a resource requirement that a process in kernel space correspondingly waits for.

In an embodiment, in a running process of the electronic device 100, resources used for application processing are limited. Therefore, the electronic device needs to continuously release memory in the running process, to ensure effective running of applications. The resources may be software or hardware resources that need to be used when the electronic device 100 processes an application event, for example, memory or hardware resources of the electronic device 100.

In a possible implementation, the electronic device 100 may detect process statuses of all processes in the kernel space, and may further obtain the resource requirement that a process in the kernel space correspondingly waits for.

In this embodiment of this application, if it is detected that the processes in the kernel space are in a resource waiting state, the electronic device obtains a requirement for a resource that each process is waiting for at this time. Specifically, processes access system resources in a running process. When the system resources are busy, these processes need to wait for resources. Different processes have different resource requirements. For example, at a same moment, a process A may wait for a memory resource, a process B may wait for an IO resource, and a process C may wait for a lock resource. In some possible implementations, resources of the resource requirements may include at least one of a memory resource, an input/output (Input/Output) resource, and a lock resource. The memory resource includes an SDRAM, a DDR SDRAM, and an RDRAM, and the IO resource may include another peripheral such as a storage device (for example, an EMMC or a UFS), or a serial port device. The lock resource may include resources such as mutex, semaphore, and rcu, and may be used for synchronization between processes. The lock resource may further include a completion resource, and may be used for synchronization between threads.

In some embodiments, the electronic device 100 may obtain, in real time, information such as a requirement for a resource that each process waits for and a waiting time of each process. Specifically, in a Linux system, a condition for a process to enter an uninterruptible sleep state may be: for example, the first process initiates an IO request, which may be reading data at a logical address of a disk or reading a file in a file system. When an IO resource is busy, an IO resource of the system cannot meet a requirement of the first process, and the first process enters a first state, namely, a D state. Alternatively, when the first process initiates a request for a memory resource but a memory resource of the system cannot meet the requirement of the first process, the first process enters the first state, or when a lock resource required by the first process is held by another process, the first process also enters the first state. In some embodiments, the first state is an uninterruptible sleep state. In other words, in this application, the first process in the first state may run without occupying a processor resource, but still occupies resources such as memory and hardware of the electronic device 100.

In some other possible implementations, the electronic device may further determine, based on a waiting time of the first process, to switch the first process to the first state. For example, it may be determined whether a time for which the first process is in the resource waiting state reaches preset duration. If the time for which the first process is in the resource waiting state reaches the preset duration, it is determined to switch the first process to the first state.

Step S32: If it is detected that the first process is in the first state and meets a preset condition, change the first process in the first state to a second state, and swap out a memory resource of the first process.

That the first process is in the first state and meets a preset condition may be one of the following cases.

It is determined whether a time for which the first process is in the first state exceeds a preset time. If the time for which the first process is in the first state does not exceed the preset time, the memory resource of the first process is not swapped out.

If the time for which the first process is in the first state exceeds the preset time, it needs to be determined whether the first process meets a condition for swapping out a memory resource. If the first process meets the condition for swapping out a memory resource, the first process in the first state is changed to the second state, and the memory resource of the first process is swapped out.

In an implementation, a swap-out priority threshold of the first process may be calculated, and the swap-out priority threshold is compared with a first threshold. Therefore, whether the first process meets the condition for swapping out a memory resource may be determined based on a comparison result.

Details may be as follows:
If the swap-out priority threshold of the first process is greater than the first threshold, it may be determined that the first process already meets the condition for swapping out a memory resource, and the first process in the first state is changed to the second state, and the memory resource of the first process is swapped out.

If the swap-out priority threshold of the first process is less than the first threshold, it may be determined that the first process does not meet the condition for swapping out a memory resource, and the memory resource of the first process is not swapped out.

Specifically, the electronic device periodically detects a status of a process in the kernel space. Generally, duration of an uninterruptible sleep state is very short. If a time for which the first process in the kernel space is in the uninterruptible sleep state exceeds the preset time, in this case, a response delay problem is caused to the operating system, and stability of the operating system is affected. Therefore, if it is detected that the time for which the first process is in the first state exceeds the preset time, and the first process already meets the condition for swapping out a memory resource, the electronic device changes the first process in the first state to the second state, and swaps out the memory resource of the first process.

For example, a mapping relationship between the first process and a cloud storage space or a storage device may be established, that is, the kernel of operating system may swap content data (namely, process information) of physical memory of the first process to the cloud storage space or the storage device, and then allocate these resources of physical memory to a second process in the kernel space, to swap out the memory resource of the first process. In a specific embodiment, the storage device may be a multimedia card (Multi-Media Card, MMC). Therefore, the electronic device may process the first process to reclaim the memory resource of the first process.

In some embodiments, the memory resource of the first process in the second state may be swapped out, but process information may be stored in a disk and the process may be resumed. That is, if the first process in the uninterruptible sleep state meets the preset condition, the electronic device may change the status of the first process, and swap out the memory resource of the first process. Therefore, by using a technical solution in this embodiment of this application, a process in the uninterruptible sleep state can be kept from occupying a kernel resource, thereby ensuring running efficiency of the device, and effectively improving availability and stability of the system.

Step S3 3: If it is detected that the released system resource meets a resource requirement of the first process in the second state, change the status of the first process, and swap in the memory resource.

It may be understood that, in some possible implementations, information about an application installed on a terminal and memory occupation information may be monitored. If it is determined that a current application meets a memory reclamation condition, an application that is currently running on the terminal and that is not used by a user is selected based on a pre-stored priority order of applications whose memory is reclaimed, and then a memory reclamation interface provided by a kernel mode is called to perform memory reclamation. In addition, in a Swap mechanism of the Linux system, if memory is insufficient when a process requests memory of the operating system, the operating system swaps out temporarily unused data in the memory and stores the data in a Swap partition. This process is Swap Out (swap out). When a process needs the data and the operating system detects that there is still idle physical memory, the data in the Swap partition is swapped back to the physical memory. This process is called Swap In.

However, the foregoing implementation may have the following problems: In one aspect, memory occupied by a process in an uninterruptible sleep state cannot be reclaimed, and a process cannot be resumed after memory is reclaimed. However, when duration of the uninterruptible sleep state is long, a response delay is caused to the operating system, and stability of the operating system is affected. In the other aspect, an application list for memory reclamation needs to be formulated in advance, and memory that is not in the application list cannot be reclaimed. In addition, the Swap mechanism can be triggered only when memory is low, and a low memory condition of the terminal cannot be prevented in advance.

In a preferred implementation of this application, as the second process in the kernel space runs or exits, the system releases some resources. Therefore, after the memory resource of the first process is swapped out, if the electronic device detects that the released system resource meets the resource requirement of the first process in the second state, the electronic device changes the status of the first process, and swaps in the memory resource, that is, the kernel of the operating system may retrieve corresponding content data from the cloud storage space or the storage device, and copy the content data back to newly allocated physical memory, to swap in the memory resource. Therefore, memory occupied by a process in an uninterruptible sleep state can be reclaimed, and a process can still be resumed after memory is reclaimed. Therefore, in this embodiment of this application, stability of the operating system can be improved, and stalling of the electronic device can be avoided, thereby improving user experience.

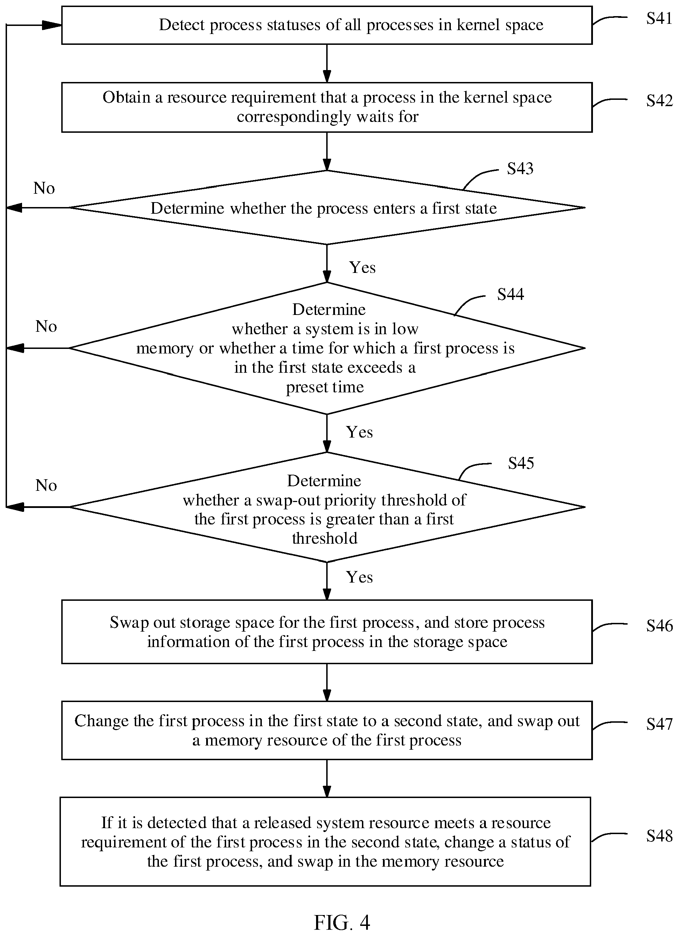

With reference to FIG. 4, an embodiment of this application further provides another more detailed method procedure. The method procedure may include the following steps.

Step S41: Detect process statuses of all processes in kernel space.

In this embodiment of this application, an electronic device periodically detects the process statuses of all the processes in the kernel space. It may be understood that, due to insufficient system resources, processes in the kernel space are usually in a resource waiting state. When a process enters the resource waiting state, the electronic device records information such as a resource requirement and a waiting time of the process.

Step S42: Obtain a resource requirement that a process in the kernel space correspondingly waits for.

In this embodiment of this application, the electronic device may obtain the resource requirement that the process in the kernel space correspondingly waits for. For example, the electronic device may obtain information such as a resource requirement and a waiting time of a process.

Step S43: Determine whether the process enters a first state (that is, determine whether a status in a task_struct structure is task_uninterruptable). If the process enters the first state, the process turns to step S44, or if no process enters the first state, the process returns to step S41.

For example, if the first process is in the resource waiting state for a specific period of time, the first process enters the first state. It may be understood that the first state is an uninterruptible sleep state. If a second process is not in the resource waiting state for a specific period of time, the second process does not enter the first state.

Step S44: Determine whether a system is in low memory or whether a time for which the first process is in the first state exceeds a preset time. If the time for which the first process is in the first state exceeds the preset time, the process turns to step S45, or if the time for which the first process is in the first state does not exceed the preset time, the process returns to step S41.

It may be understood that, when the system is in a low memory state for more than a first preset time, for example, when the system is in the low memory state for more than 2s, it indicates that a memory resource of the system is insufficient to support efficient running of the system, and as a result stalling is caused to the system. Alternatively, when the time for which the first process is in the first state exceeds a second preset time, for example, when the time for which the first process is in the first state exceeds 5s, it may indicate that the first process in the kernel space has been in the uninterruptible sleep state for an excessively long time. In the two cases, a response delay problem is definitely caused to the operating system, and consequently stability of the operating system is affected.

It can be learned that both the foregoing two cases affect running efficiency of the operating system. Therefore, upon detecting either of the foregoing two cases, the electronic device uses the case as a trigger event, to trigger a memory reclamation mechanism in this embodiment of this application, thereby improving running efficiency and stability of the system.

Step S45: Determine whether a swap-out priority threshold of the first process is greater than a first threshold. If the swap-out priority threshold of the first process is greater than the first threshold, the process turns to step S46, or if the swap-out priority threshold of the first process is not greater than the first threshold, the process returns to step S41.

In an implementation, the swap-out priority threshold may be related to a size of memory occupied by a process and a time for which the process has entered the first state.

For example, the electronic device may calculate the swap-out priority threshold by using the following formula: y = k × m + j × t, where y represents the swap-out priority threshold, m represents the size of memory occupied by the process, t represents the time for which the process has entered the first state, and k and j represent weighting coefficients for calculating a swap-out priority of the process.

In a possible implementation, after the swap-out priority threshold of the first process is calculated, the swap-out priority threshold of the first process is compared with the first threshold. If the swap-out priority threshold of the first process is greater than the first threshold, it is determined that the memory resource of the first process can be swapped out. If the swap-out priority threshold of the first process is less than the first threshold, it is determined not to swap out the memory resource of the first process.

It may be understood that, in this embodiment of this application, when the value of y is larger, it indicates that the swap-out priority of the process is higher, and when the value of y indicates is smaller, it indicates that the swap-out priority of the process is lower. In this way, in an embodiment of this application, the electronic device may obtain the size of memory occupied by the first process and a time for which the first process has entered the first state, and therefore determine the swap-out priorities of a plurality of first processes with reference to an operation of the weighting coefficients.

It may be understood that the electronic device may sort the plurality of first processes in the first state based on the swap-out priority threshold, first use a first process with the highest swap-out priority threshold as a to-be-swapped-out process, to swap out memory occupied by the first process, and then continue to use a first process with the second highest swap-out priority threshold as a to-be-swapped-out process. In this case, when a process has a larger swap-out priority threshold, memory occupied by the process is swapped out earlier, and when a process has a lower swap-out priority, memory occupied by the process is swapped out later.

In this design, the manner of determining a to-be-swapped-out first process based on a size of memory occupied by a first process and a time for which the first process has entered the first state may achieve the following technical effects.

A first process that occupies large memory and that has entered the first state for a long time may be preferentially swapped out, so that a memory resource occupied by the first process can be swapped out in time, thereby improving running efficiency of the system.

Step S46: Swap out storage space for the first process, and store process information of the first process in the storage space.

The electronic device swaps out storage space for the first process, and the electronic device stores the process information of the first process in the storage space.

For example, the meaning of the uninterruptible sleep state is that some processing procedures of the kernel cannot be interrupted. Therefore, if these processing processes are interrupted, a data loss may occur. Therefore, before the status of the first process is changed, temporary data (namely, the process information) of the first process is first stored, so that it can be ensured that the process can be found in next resumption after the change. In some embodiments, the electronic device may store the process information of the first process in a storage device or a cloud storage space. Therefore, memory space is released for the system, and it is ensured that data generated during running of the first process is not lost.

It may be understood that, in this embodiment of this application, the process information may include at least one of a process identifier (for example, the operating system creates a process ID each time a process is run, where the process ID is the process identifier, and the process identifier is for distinguishing between different processes), a state that the first process is in before the status of the first process is changed (for example, if a process status before the process status of the first process is changed is an uninterruptible sleep state, and in this case, the process information is an uninterruptible sleep state), the time for which the first process is in the first state (for example, a time for which the first process is in the uninterruptible sleep state is 5s, and in this case, the time is 5s in the process information), and a data information status of the first process (for example, a loading completion ratio or a data transmission completion ratio of the first process is 30%, and in this case, a loading completion ratio or a transmission completion ratio is 30% in the process information). It may be understood that the process information is not limited to the information. This is not specifically limited in this application.

Step S47: Change the first process in the first state to a second state, and swap out the memory resource of the first process.

The electronic device may change the status of the first process, that is, change the first process in the first state to the second state. In this embodiment of this application, the memory resource occupied by the first process in the second state may be released, to swap out the memory resource of the first process.

Step S48: If it is detected that the released system resource meets a resource requirement of the first process in the second state, change the status of the first process, and swap in the memory resource.

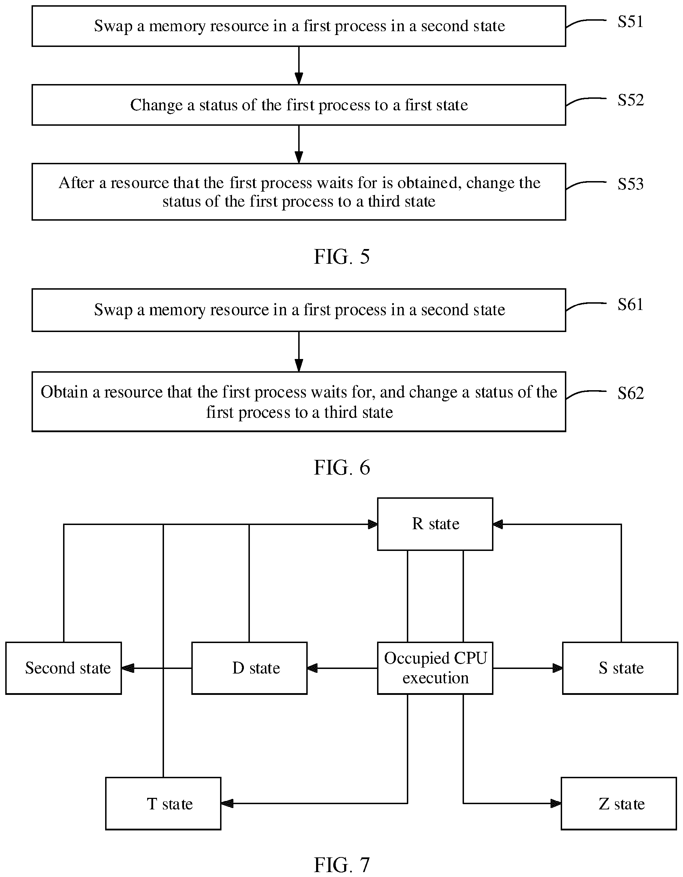

As shown in FIG. 5, if it is detected that a released system resource meets a resource requirement of a first process in a second state, a method for changing a status of the first process may include but is not limited to steps S51 to S53.

Step S51: Swap a memory resource in the first process in the second state.

In a possible design, when it is detected that the released system resource can already meet the resource requirement of the first process in the second state, the memory resource is swapped in the first process in the second state, an operating system retrieves corresponding content data from a kernel storage component, and copies the content data back to physical memory, to swap in the memory resource.

Step S52: Change the status of the first process to a first state.

In a possible design, after the memory resource is swapped in the first process in the second state, the first process in the second state is changed to the first state, that is, the status of the first process is changed to a D state.

Step S53: After a resource that the first process waits for is obtained, change the status of the first process to a third state.

In a possible design, after the released system resource already meets the resource requirement of the first process, the first process in the D state may obtain the resource that the first process waits for, and then the status of the first process is changed to the third state. It may be understood that the third state in this embodiment of this application may be an executable state (namely, an R state). Therefore, in this embodiment of this application, the first process may resume the process based on the released system resource.

As shown in FIG. 6, if it is detected that a released system resource meets a resource requirement of a first process in a second state, a method for changing a status of the first process may include but is not limited to steps S61 and S62.

Step S61: Swap a memory resource in the first process in the second state.

In a possible design, when it is detected that the released system resource can already meet the resource requirement of the first process in the second state, the memory resource is swapped in the first process in the second state, an operating system retrieves corresponding process data from a storage component, and copies the process data back to physical memory, to swap in the memory resource.

Step S62: Obtain a resource that the first process waits for, and change the status of the first process to a third state.

In a possible design, after the released system resource already meets the resource requirement of the first process, the first process in the second state may obtain the resource that the first process waits for, and then the status of the first process is changed to the R state. Therefore, in this embodiment of this application, the first process may resume the process based on the released system resource. It can be learned from the foregoing that, in this embodiment of this application, the first process may swap in and out the memory resource according to a system mechanism.

FIG. 7 is a diagram of state switching of a process in kernel space according to an embodiment of this application.

A Linux system is used as an example. In this embodiment of this application, a second state may be added when a first process is in a first state (namely, a D state), that is, the first process in the first state is changed to the second state, so that a memory resource of the first process can be swapped out.

Specifically, an example in which the first state is the D state is used. In the Linux system, for processes running on a CPU, if a system resource cannot meet a resource requirement of the first process, for example, when the first process initiates an IO request, namely, an IO waiting state, but the system resource cannot meet an IO resource that the first process waits for, the first process is switched from occupying the CPU to the D state.

In this design, when it is detected that the system is in low memory or a time for which the first process is in the first state reaches a preset time, the first process in the D state is switched to a target state, and in this case, the memory resource is swapped out. When a released system resource can meet the resource requirement of the first process, the first process in the target state is switched to an R state, and the memory resource is swapped in. Certainly, processes running on the CPU may be switched to a T state, an S state, or a Z state in a scheduling manner of an operating system.

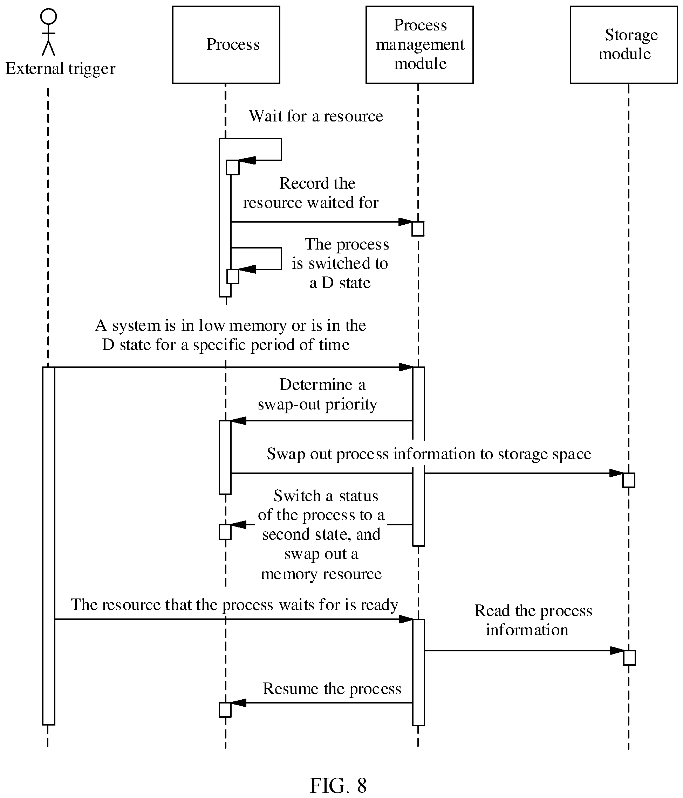

In an embodiment of this application, to better describe an operation of a process in this application, with reference to FIG. 8, a control process of the process may include the following steps.

A process accesses a system resource when running. If the system resource is busy, the process needs to wait for the resource, and a process management module obtains a requirement for a resource that the process correspondingly waits for. When the process is in a resource waiting state for a specified period of time, the process is switched to the D state. A memory swap-out mechanism is externally triggered, that is, it is determined whether the system is in low memory or whether a time for which the process is in the D state exceeds the preset time. If time for which the process is in the D state exceeds the preset time, a swap-out priority of the process is determined.

Further, process information is swapped out to storage space, and the process management module changes the process in the D state to the second state, and swaps out a memory resource of the process. When the resource that the process waits for is ready, that is, it is detected that the released system resource can meet a resource requirement of the process in the second state, the process information is read from the storage space, and then the process is resumed.

According to the process switching in this embodiment of this application, the first process in the D state is changed to the second state, the memory resource of the first process is swapped out, and then the process is correspondingly resumed based on a requirement of a resource that the first process waits for, so that running efficiency and stability of the operating system are higher.

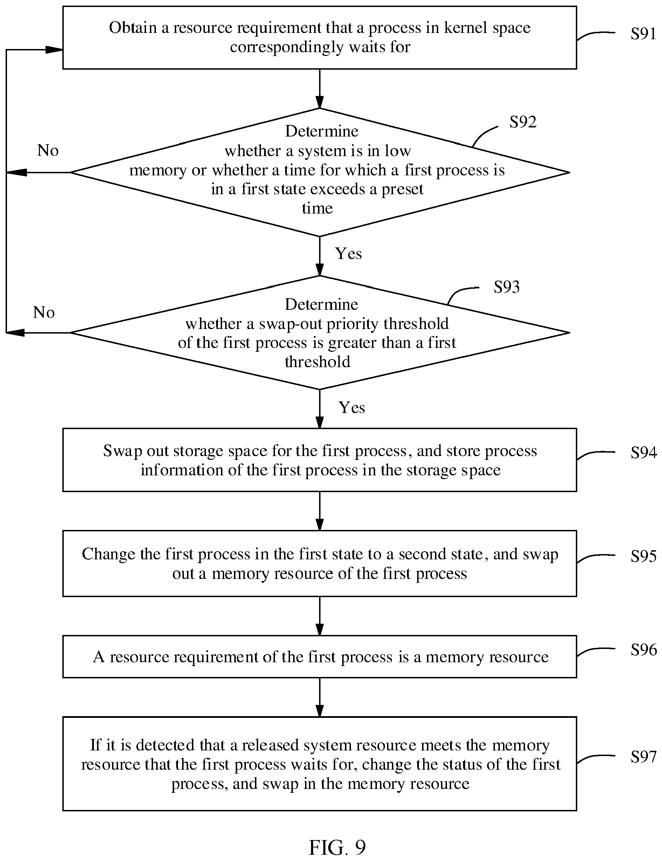

With reference to FIG. 9, the following describes a specific implementation process of this application by using an application scenario in which a resource requirement of a first process is a memory resource. The method may include but is not limited to the following steps.

Step S91: Obtain a resource requirement that a process in kernel space correspondingly waits for.

Step S92: Determine whether a system is in low memory or whether a time for which the first process is in a first state exceeds a preset time. If the time for which the first process is in the first state exceeds the preset time, the process turns to step S93, or if the time for which the first process is in the first state does not exceed the preset time, the process returns to step S91.

Step S93: Determine whether a swap-out priority threshold of the first process is greater than a first threshold, where if the swap-out priority threshold of the first process is greater than the first threshold, the process turns to step S94, or if the swap-out priority threshold of the first process is not greater than the first threshold, the process returns to step S91.

If the swap-out priority threshold of the first process is greater than the first threshold, it is determined that the memory resource of the first process can be swapped out. If the swap-out priority threshold of the first process is less than the first threshold, it is determined not to swap out the memory resource of the first process.

Step S94: Swap out storage space for the first process, and store process information of the first process in the storage space.

Step S95: Change the first process in the first state to a second state, and swap out the memory resource of the first process.

The electronic device may change a status of the first process, that is, change the first process in the first state to the second state. In this embodiment of this application, the memory resource occupied by the first process in the second state may be released, to swap out the memory resource of the first process.

Step S96: The resource requirement of the first process is the memory resource.

Step S97: If it is detected that a released system resource meets a memory resource that the first process waits for, change the status of the first process, and swap in the memory resource.

When the released system resource can meet a memory resource requirement of the first process, the status of the first process may be changed, and the memory resource may be swapped in, to resume the first process.

It can be learned that, in the method procedure described in FIG. 9, when the resource requirement of the process is a memory resource, memory of the first process in a D state may be reclaimed, to reduce a probability of stalling of the electronic device. In addition, when the released system resource can meet the memory resource requirement of the process, the first process can be resumed, thereby improving user experience.

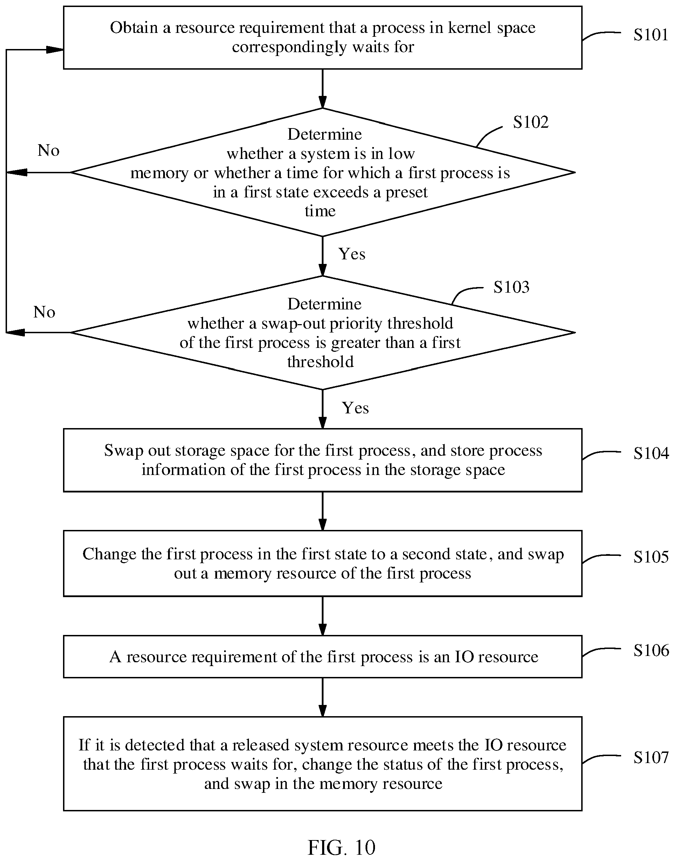

With reference to FIG. 10, the following describes a specific implementation process of this application by using an application scenario in which a resource requirement of a first process is an IO resource. The method may include but is not limited to the following steps.

Step S101: Obtain a resource requirement that a process in kernel space correspondingly waits for.

Step S102: Determine whether a system is in low memory or whether a time for which the first process is in a first state exceeds a preset time. If the time for which the first process is in the first state exceeds the preset time, the process turns to step S103, or if the time for which the first process is in the first state does not exceed the preset time, the process returns to step S101.

Step S103: Determine whether a swap-out priority threshold of the first process is greater than a first threshold, where if the swap-out priority threshold of the first process is greater than the first threshold, the process turns to step S104, or if the swap-out priority threshold of the first process is not greater than the first threshold, the process returns to step S101.

If the swap-out priority threshold of the first process is greater than the first threshold, it is determined that the memory resource of the first process can be swapped out. If the swap-out priority threshold of the first process is less than the first threshold, it is determined not to swap out the memory resource of the first process.

Step S104: Swap out storage space for the first process, and store process information of the first process in the storage space.

Step S105: Change the first process in the first state to a second state, and swap out the memory resource of the first process.

The electronic device may change a status of the first process, that is, change the first process in the first state to the second state. In this embodiment of this application, the memory resource occupied by the first process in the second state may be released, to swap out the memory resource of the first process.

Step S106: The resource requirement of the first process is the IO resource.

Step S107: If it is detected that a released system resource meets an IO resource that the first process waits for, change the status of the first process, and swap in the memory resource.

When the released system resource can meet an IO resource requirement of the first process, the status of the first process may be changed, and the memory resource may be swapped in, to resume the first process.

It can be learned that, in the method procedure described in FIG. 10, when a resource requirement of the first process is an IO memory resource, memory of the first process in a D state may be reclaimed, to reduce a probability of stalling of the electronic device. In addition, when the released system resource can meet the IO resource requirement of the first process, the first process can be resumed, thereby improving user experience.

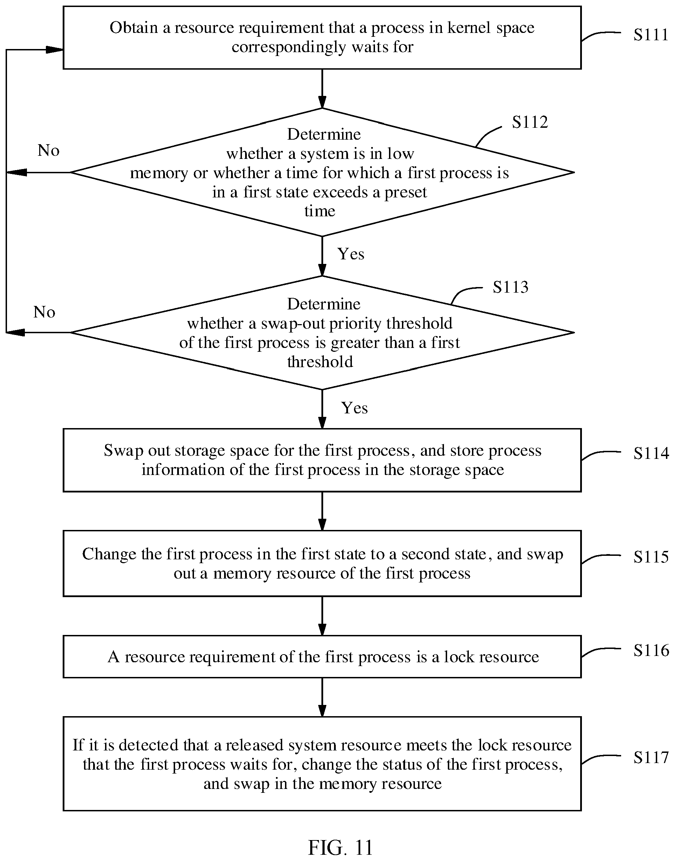

With reference to FIG. 11, the following describes a specific implementation process of this application by using an application scenario in which a resource requirement of a first process is a lock resource. The method may include but is not limited to the following steps.

Step S111: Obtain a resource requirement that a process in kernel space correspondingly waits for.

Step S112: Determine whether a system is in low memory or whether a time for which the first process is in a first state exceeds a preset time. If the time for which the first process is in the first state exceeds the preset time, the process turns to step S113, or if the time for which the first process is in the first state does not exceed the preset time, the process returns to step S111.

Step S113: Determine whether a swap-out priority threshold of the first process is greater than a first threshold, where if the swap-out priority threshold of the first process is greater than the first threshold, the process turns to step S 114, or if the swap-out priority threshold of the first process is not greater than the first threshold, the process returns to step S111.

If the swap-out priority threshold of the first process is greater than the first threshold, it is determined that the memory resource of the first process can be swapped out. If the swap-out priority threshold of the first process is less than the first threshold, it is determined not to swap out the memory resource of the first process.

Step S114: Swap out storage space for the first process, and store process information of the first process in the storage space.

Step S115: Change the first process in the first state to a second state, and swap out the memory resource of the first process.

The electronic device may change a status of the first process, that is, change the first process in the first state to the second state. In this embodiment of this application, the memory resource occupied by the first process in the second state may be released, to swap out the memory resource of the first process.

Step S116: The resource requirement of the first process is the lock resource.

Step S117: If it is detected that a released system resource meets a lock resource that the first process waits for, change the status of the first process, and swap in the memory resource.

When the released system resource can meet a memory resource requirement of the first process, the status of the first process may be changed, and the memory resource may be swapped in, to resume the first process.

It can be learned that, in the method procedure described in FIG. 11, when a resource requirement of the first process is a lock resource, memory of the first process in a D state may be reclaimed, to reduce a probability of stalling of the electronic device. In addition, when the released system resource can meet the lock resource requirement of the first process, the first process can be resumed, thereby improving user experience.

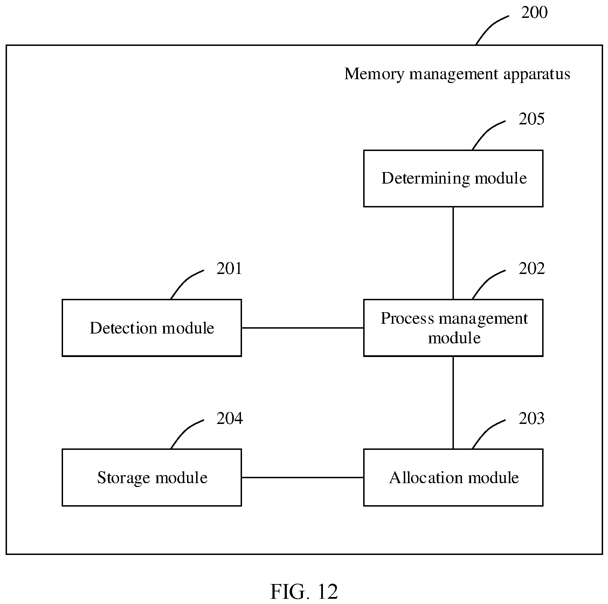

FIG. 12 is a schematic diagram of a structure of a memory management apparatus according to an embodiment of this application. The memory management apparatus may be configured to perform some or all steps of the memory management methods described in FIG. 3 to FIG. 11. For details, refer to related descriptions in FIG. 3 to FIG. 11, and details are not described herein again. As shown in FIG. 12, the memory management apparatus 200 may include:
a detection module 201, configured to obtain a resource requirement that a process in kernel space correspondingly waits for; and
a process management module 202, configured to: if it is detected that a first process is in a first state and meets a preset condition, change the first process in the first state to a second state, and swap out a memory resource of the first process.

The process management module 202 is further configured to: if it is detected that the released system resource meets a resource requirement of the first process in the second state, change the status of the first process, and swap in the memory resource.

Optionally, the process management module 202 is specifically configured to:
if it is detected that the released system resource meets a resource requirement of the first process in the second state, change the status of the first process to a third state, and swap in the memory resource.

Optionally, the process management module 202 is further specifically configured to:
if it is detected that the released system resource meets a resource requirement of the first process in the second state, change the status of the first process to the first state, and swap in the memory resource by using a system.

Optionally, the memory management apparatus 200 may further include:
an allocation module 203, where before the process management module 202 changes the first process in the first state to the second state, the allocation module 203 is further configured to swap out storage space for the first process; and
a storage module 204, configured to store process information of the first process in the storage space.

Specifically, the detection module 201 is further configured to:
obtain a size of memory occupied by the first process and a time for which the first process has entered the first state; and
obtain a swap-out priority of the first process based on the size of memory occupied by the first process and the time for which the first process has entered the first state.

The determining module 205 is configured to determine, based on the swap-out priority of the first process, a to-be-swapped-out first process in the first process, that is, configured to determine a priority order of swapping out memory resources of a plurality of first processes in the first state.

It may be understood that the division of the modules in the memory management apparatus is merely used as an example for description. In another embodiment, the memory management apparatus may be divided into different modules as required, to implement all or part of the functions of the memory management apparatus.

Implementation of the modules in the memory management apparatus provided in this embodiments of this application may be in a form of a computer program. The computer program may run on an electronic device or a server. A program module formed by the computer program may be stored in a memory of the terminal or the server. When the computer program is executed by a processor, the steps described in this embodiment of this application are implemented. For specific implementations of the modules in this embodiment of this application, refer to corresponding descriptions in the method embodiments shown in FIG. 3 to FIG. 11. In the memory management apparatus described in FIG. 12, low-usage memory may be reclaimed in advance, so that application stalling can be avoided, and user experience can be improved. For specific content, refer to the specific embodiments of the foregoing memory management method, and details are not described herein again.

An embodiment of this application further provides a computer-readable storage medium. The readable storage medium stores computer instructions, and when the instructions are run on a computing device, the computing device is enabled to perform the memory management method provided in the foregoing embodiments.

It is clear that, for a person skilled in the art, this application is not limited to details of the foregoing example embodiments, and this application can be implemented in another specific form without departing from the spirit or basic features of this application. Therefore, appropriate modifications and variations made to the foregoing embodiments shall fall within the protection scope of this application provided that the modifications and variations fall within the essence and spirit of this application.

## Claims

1. A memory management method, wherein the memory management method comprises:
obtaining a resource requirement that a process in kernel space correspondingly waits for;
if it is detected that a first process is in a first state and meets a preset condition, changing the first process in the first state to a second state, and swapping out a memory resource of the first process; and
if it is detected that a released system resource meets a resource requirement of the first process in the second state, changing a status of the first process, and swapping in a memory resource.

2. The memory management method according to claim 1, wherein the memory management method further comprises:
if it is detected that the released system resource meets the resource requirement of the first process in the second state, changing the status of the first process to a third state, and swapping in the memory resource.

3. The memory management method according to claim 1 or 2, wherein the memory management method further comprises:
if it is detected that the released system resource meets the resource requirement of the first process in the second state, changing the status of the first process to the first state, and allocating, by a system, a resource to the first process.

4. The memory management method according to any one of claims 1 to 3, wherein before the changing the first process in the first state to a second state, the memory management method further comprises:
swapping out storage space for the first process; and
storing process information of the first process in the storage space.

5. The memory management method according to any one of claims 1 to 3, wherein a resource of the resource requirement comprises at least one of a memory resource, an IO resource, and a lock resource.

6. The memory management method according to claim 5, wherein after the changing the first process in the first state to a second state, the memory management method further comprises:
if the resource requirement of the first process is a memory resource,
if it is detected that the released system resource meets a memory resource that the first process waits for, changing the status of the first process, and swapping in the memory resource.

7. The memory management method according to claim 5, wherein after the changing the first process in the first state to a second state, the memory management method further comprises:
if the resource requirement of the first process is an IO resource,
if it is detected that the released system resource meets an IO resource that the first process waits for, changing the status of the first process, and swapping in the memory resource.

8. The memory management method according to claim 5, wherein after the changing the first process in the first state to a second state, the memory management method further comprises:
if the resource requirement of the first process is a lock resource,
if it is detected that the released system resource meets a lock resource that the first process waits for, changing the status of the first process, and swapping in the memory resource.

9. The memory management method according to claim 4, wherein the process information comprises at least one of a process identifier, a time for which a process is in the first state, and a data information status of the process.

10. The memory management method according to any one of claims 1 to 9, wherein the memory management method further comprises:
obtaining a size of memory occupied by the first process and a time for which the first process has entered the first state;
obtaining a swap-out priority of the first process based on the size of memory occupied by the first process and the time for which the first process has entered the first state; and
determining, based on the swap-out priority of the first process, a to-be-swapped-out first process in the first process.

11. An electronic device, comprising:
a memory, configured to store a computer program; and
a processor, configured to execute the computer program stored in the memory, wherein when the computer program is executed, the processor is configured to perform the memory management method according to any one of claims 1 to 10.

12. A computer-readable storage medium, wherein the computer-readable storage medium comprises computer instructions, and when the computer instructions run on an electronic device, the electronic device performs the memory management method according to any one of claims 1 to 10.
